# EUROPEAN PATENT APPLICATION

(11) **EP 4 344 011 A1**
(43) Date of publication of application: **27.03.2024**
(21) Application number: 21940046.2
(22) Date of filing: 16.05.2021
(51) Int. Cl.: H02J 7/00, B60R 11/02

(54) **WIRELESS CHARGING MECHANISM AND VEHICLE USING SAID MECHANISM**

(71) Applicant: Zhejiang Smart Intelligence Technology Co., Ltd., Ningbo, Zhejiang 315336 (CN)
(72) Inventor: JIANG, Jian, Ningbo, Zhejiang 315336 (CN); CAI, HongJie, Ningbo, Zhejiang 315336 (CN)
(74) Representative: Zaboliene, Reda
(86) International application number: PCT/CN2021/093989
(87) International publication number: WO 2022/241587

(57) **Abstract**

The present invention relates to the field of vehicle technology, and relates in particular to a wireless charging mechanism and a vehicle using said mechanism. The wireless charging mechanism comprises a wireless charging apparatus and a sun blocking cover, the wireless charging apparatus being arranged on a dashboard of a vehicle; the wireless charging apparatus comprises an opening, the opening faces a steering wheel of the vehicle, and the wireless charging apparatus is used for placing a mobile phone and charging the mobile phone; the sun blocking cover is rotatably connected to the dashboard or the wireless charging apparatus, and said cover matches with the opening. Consequently, a driver can conveniently look at information on a display screen of a mobile phone when driving; when the sun blocking cover is opened to a certain angle, an effect of blocking sunlight can be achieved, facilitating the driver in being able to clearly see the information on the display screen of the mobile phone, and when the sun blocking cover is closed, effects of an attractive aesthetic and protection of the mobile phone can be achieved.

## Description

### TECHNICAL FIELD

The present invention relates to the technical field of vehicles, and in particular to a wireles s charging mechanism and a vehicle using same.

### BACKGROUND

Under drive of rapid development of internet technology, mobile phones have become indispensable products in people's lives. However, a too high use frequency of a smartphone causes a consumption rate of its battery power to be accelerated, which results in that people need to carry or search for devices that can charge in daily travels. In order to improve convenience of people's travels, configuring charging apparatuses in cars can effectively improve users' experience.

However, in traditional car models, charging devices are plug-in charging cables. Although they can meet people's charging needs, they affect placement of mobile phones. Moreover, drivers always need to unplug charging cables when retrieving mobile phones, which occupies drivers' attention and poses safety hazard.

Wireless charging apparatuses can effectively solve the above problems. However, vehicular charging apparatuses in the prior art are often arranged on auxiliary dashboards and occupy storage space. Moreover, in practical life, people often use mobile phones as navigation devices; during driving, a driver needs to constantly look towards an auxiliary dashboard during a traveling process, which may distract the driver's attention and affect driving safety.

### SUMMARY OF THE DISCLOSURE

The present invention is intended to solve a technical problem in the prior art that vehicular wireless charging apparatuses for mobile phones occupy storage space of auxiliary dashboards and affect driving safety.

In order to solve the above technical problem, in one aspect, the present application discloses a wireless charging mechanism comprising: a wireless charging apparatus, wherein the wireless charging apparatus is arranged on a dashboard of a vehicle; the wireless charging apparatus comprises an opening, the opening faces a steering wheel of the vehicle; the wireless charging apparatus is configured to place a mobile phone and charging the mobile phone; and a sun blocking cover, wherein the sun blocking cover is rotatably connected to the dashboard or the wireless charging apparatus, and matches with the opening.

Optionally, the wireless charging apparatus further comprises a placement structure and a wireless charging module; the wireless charging module is connected to a bottom of the placement structure, and the placement structure is configured to place the mobile phone; the wireless charging module is connected to a control system of the vehicle and configured to charge the mobile phone.

Optionally, the placement structure comprises a bottom board; the bottom board comprises a first surface and a second surface being opposite to each other; the first surface is adjacent to the opening, and the first surface is in contact with the mobile phone; the wireless charging module is arranged on the second surface.

Optionally, the placement structure further comprises a stop member; the stop member is arranged at a first side of the bottom board, the first side is a side being adjacent to a floor of the vehicle; an area enclosed by the stop member and a side edge of the bottom board is the opening.

Optionally, the placement structure further comprises a coaming, the coaming is a circular structure; a bottom of the coaming is connected to the first surface; an area enclosed by a top of the coaming is the opening.

Optionally, the first surface is provided thereon with a buffer member; material of the buffer member comprises rubber.

Optionally, the wireless charging module is further configured to transmit a charging signal to the control system; the mobile phone is connected in communication with the control system of the vehicle, the mobile phone is configured to receive vehicle information transmitted base on the charging signal by the control system, and display the vehicle information on a display screen of the mobile phone.

Optionally, the dashboard comprises a recess groove structure and a flat plate structure connected to each other; the flat plate structure is connected to a vehicle frame of the vehicle, the placement structure is located in the recess groove structure, and the sun blocking cover is rotatably connected to the recess groove structure; when the sun blocking cover is closed, the sun blocking cover and the flat plate structure are located in the same plane.

Optionally, a cross-sectional area of the placement structure comprises a rectangle and an ellipse.

Optionally, when the sun blocking cover is opened, there is a first preset included angle between the sun blocking cover and the bottom of the placement structure; a range of the first preset included angle is 10-80 degrees.

Optionally, the opening and the dashboard have preset heights.

In another aspect, the present application further discloses a vehicle comprising a dashboard and the above wireless charging mechanism.

Optionally, there is a second preset angle between the dashboard and a floor of the vehicle; the second preset angle is 10-70 degrees.

By using the above technical solutions, the wireless charging mechanism provided by the present application has the following advantageous effect.
1. The wireless charging mechanism comprises a wireless charging apparatus and a sun blocking cover, the wireless charging apparatus is arranged on a dashboard of a vehicle; the wireless charging apparatus comprises an opening, the opening faces a steering wheel of the vehicle; the wireless charging apparatus is configured to place a mobile phone and charging the mobile phone. It is convenient for a driver to watch information on a display screen of the mobile phone during a driving process.
2. The sun blocking cover is rotatably connected to the dashboard or the wireless charging apparatus, and matches with the opening. The sun blocking cover can achieve effect of blocking sunlight when being opened by a certain angle, it is convenient for a driver to see information on a display screen of the mobile phone clearly. Moreover, the sun blocking cover can achieve effect of protecting the mobile phone and beautifying when being closed.

### BRIEF DESCRIPTION OF THE DRAWINGS

In order to explain technical solutions of embodiments of the present application more clearly, drawings required to be used in description of the embodiments will be briefly introduced below. It is obvious that the drawings in the following description are only some embodiments of the present application. For those skilled in the art, other drawings can be further obtained according to these drawings on the premise of paying no creative work.
FIG. 1 is a schematic view of mounting an optional wireless charging mechanism of the present application.
FIG. 2 is a structural schematic view of an opened state of an optional wireless charging mechanism of the present application.
FIG. 3 is a structural schematic view of a closed state of an optional wireless charging mechanism of the present application.
FIG. 4 is a brief structural view of an optional placement structure of the present application.

The following is supplementary explanation of the accompanying drawings: 1-wireless charging apparatus; 101-opening; 102-placement structure; 1021-bottom board; 1022-stop member; 1023-coaming; 103-wireless charging module; 2-sun blocking cover; 3-dashboard; 4-steering wheel.

### DETAILED DESCRIPTION

The technical solutions in the embodiments of the present application will be described clearly and completely below in combination with the drawings in the embodiments of the present application. Obviously, the described embodiments are merely some embodiments of the present application, rather than all embodiments. Based on the embodiments of the present application, any other embodiment obtained by one of ordinary skill in the art on the premise of paying no creative work should belong to the protection scope of the present application.

"An/one embodiment" or "embodiment" herein referred to means a specific feature, structure or feature that can be included in at least one implementation of the present application. In the description of the present application, it should be understood that orientations or position relationships indicated by the terms "up", "down", "top", "bottom", and so on are based on orientations or position relationships shown in the attached drawings, which are only intended to facilitate describing the present application and simplifying the description, rather than indicating or implying that a device or element referred to must have a specific orientation, or be constructed and operated in a specific orientation, and thus should not be understood as any limit to the present application. In addition, the terms "first" and "second" are only used for describing purposes, and should not be understood as indicating or implying relative importance or implicitly indicating the number of indicated technical features. Therefore, the features defined as "first" and "second" can explicitly or implicitly include one or more such features. Moreover, the terms "first", "second" and the like are used to distinguish similar objects, and need not be used to describe a specific sequence or order. It should be understood that data used in this way can be interchanged in appropriate cases, so that the embodiments of the present application described herein can be implemented in order other than those illustrated or described herein.

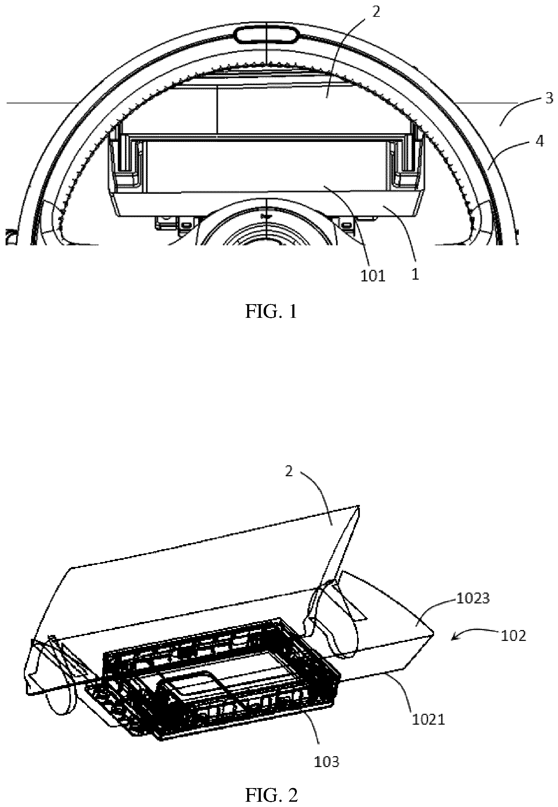

As shown in FIG. 1, FIG. 1 is a schematic view of mounting an optional wireless charging mechanism of the present application. The present application discloses a wireless charging mechanism, which includes a wireless charging apparatus 1 and a sun blocking cover 2. The wireless charging apparatus 1 is arranged on a dashboard 3 of a vehicle, and the wireless charging apparatus 1 includes an opening 101, the opening 101 faces a steering wheel 4 of the vehicle; the wireless charging apparatus 1 is configured to place a mobile phone and charging the mobile phone, so as to facilitate a driver's viewing of information on a display screen of the mobile phone during a driving process. The sun blocking cover 2 is rotatably connected to the dashboard 3 or the wireless charging apparatus 1, and matches with the opening 101. The sun blocking cover 2 can achieve effect of blocking sunlight when being opened by a certain angle, reflection of the mobile phone is prevented, and it is convenient for a driver to see information on the display screen of the mobile phone clearly; moreover, the sun blocking cover 2 can achieve effect of protecting the mobile phone and beautifying when being closed.

In the prior art, a vehicular charging apparatus is usually arranged on an auxiliary dashboard, and a mobile phone is exposed on the outside. When a driver needs to answer a call or view information during driving, it is required to turn a gaze, thus the driver's attention may be distracted and driving safety is affected.

Optionally, the wireless charging apparatus 1 is located at a position behind the steering wheel 4 and being visible in a field of view.

Optionally, the sun blocking cover 2 can be connected to the dashboard 3 or the wireless charging apparatus 1 through a press-to-open structure. When a user exerts a certain downward force on a preset location of the sun blocking cover 2, the sun blocking cover 2 will automatically open by a preset angle. The press-to-open structure makes an appearance of the wireless charging mechanism be more beautiful and is convenient to operate; of course, according to requirements, it is also possible to dispose a switch on the sun blocking cover 2.

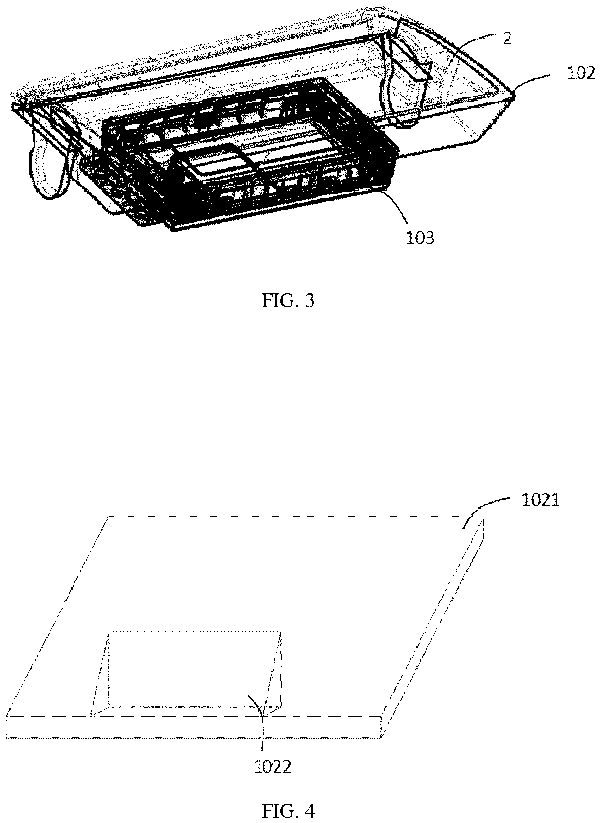

In an optional embodiment, as shown in FIG. 2 and FIG. 3, FIG. 2 is a structural schematic view of an opened state of an optional wireless charging mechanism of the present application; FIG. 3 is a structural schematic view of a closed state of an optional wireless charging mechanism of the present application. The wireless charging apparatus 1 further includes a placement structure 102 and a wireless charging module 103; the wireless charging module 103 is connected to a bottom of the placement structure 102, and the placement structure 102 is configured to place the mobile phone; the wireless charging module 103 is connected to a control system of the vehicle and configured to charge the mobile phone.

In an optional embodiment, when the sun blocking cover 2 is opened, there is a first preset included angle between the sun blocking cover 2 and the bottom of the placement structure 102; a range of the first preset included angle is 10-80 degrees.

In an optional embodiment, the dashboard 3 includes a recess groove structure and a flat plate structure connected to each other; the flat plate structure is connected to a vehicle frame of the vehicle, the placement structure 102 is located in the recess groove structure, and the sun blocking cover 2 is rotatably connected to the recess groove structure; when the sun blocking cover 2 is closed, the sun blocking cover 2 and the flat plate structure are located in the same plane.

In another optional embodiment, the dashboard 3 can further include a through hole and a connecting member, the placement structure 102 is arranged in the through hole and fixedly connected to the through hole, the sun blocking cover 2 is rotatably connected to the through hole; optionally, a bottom of the dashboard 3 is provided with a fixing frame, the placement structure 102 is fixedly connected to the fixing frame and located in the through hole, and the sun blocking cover 2 is rotatably connected to the fixing frame.

In an optional embodiment, the opening 101 and the dashboard 4 have preset heights.

In an optional embodiment, it can be seen from FIG. 2 that the placement structure 102 includes a bottom board 1021; the bottom board 1021 includes a first surface and a second surface being opposite to each other; the first surface is adjacent to the opening 101, and the first surface is in contact with the mobile phone; the wireless charging module 103 is arranged on the second surface, such that the mobile phone is placed more stably, and the wireless charging module 103 does not occupy space in the placement structure 102.

In another optional embodiment, as shown in FIG. 4, FIG. 4 is a brief structural view of an optional placement structure of the present application. The placement structure 102 further includes a stop member 1022; the stop member 1022 is arranged at a first side of the bottom board 1021, the first side is a side being adjacent to a floor of the vehicle; an area enclosed by the stop member 1022 and a side edge of the bottom board 1021 is the opening 101.

In an optional embodiment, it can be seen from FIG. 2 that the placement structure 102 further includes a coaming 1023, the coaming 1023 is a circular structure; a bottom of the coaming 1023 is connected to the first surface; an area enclosed by a top of the coaming 1023 is the opening 101.

In an optional embodiment, the first surface is provided thereon with a buffer member; material of the buffer member comprises rubber, thereby buffering collision between the mobile phone and a bottom surface of the placement structure 102.

In an optional embodiment, the wireless charging module 103 is further configured to transmit a charging signal to the control system; the mobile phone is connected in communication with the control system of the vehicle, the mobile phone is configured to receive vehicle information transmitted base on the charging signal by the control system, and display the vehicle information on a display screen of the mobile phone.

Optionally, the vehicle information includes vehicle speed, time, temperature, and other information. Of course, the mobile phone can also be used for navigation and weather display, such that the mobile phone in this state can be used as an instrument screen, thereby reducing cost of instrument devices.

In an optional embodiment, a cross-sectional area of the placement structure 102 includes a rectangle and an ellipse.

In summary, the wireless charging mechanism provided by the present application includes the dashboard 3 and the placement structure 102, the placement structure 102 is mounted on the fixing frame of the dashboard 3, the wireless charging module 103 is fixed on the bottom of the placement structure 102, and the sun blocking cover 2 is rotatably connected to the dashboard 3 through a rotation shaft. Among them, the wireless charging module 103 is connected to a vehicle system host through a wire harness; when a mobile phone is placed on the buffer member on the bottom surface of the placement structure 102, the mobile phone will automatically start connection software to connect and communicate with a vehicle system. The human-machine system can constantly transmit vehicle information to the mobile phone, thereby realizing displaying information such as vehicle speed, navigation, temperature, weather, etc., by the mobile phone. When the sun blocking cover 2 is opened, it is also used as a brim, which can block out sunlight and avoid sunlight reflection from affecting persons inside the vehicle. When a driver closes the flip cover, profilings of the flip cover and of an outer surface are integrated, so as to hide the mobile phone or stored items, create simple and beautiful feeling of the product, and enhancing humanistic care and technological sense of the product.

In another aspect, the present application further discloses a vehicle, which includes a dashboard 3 and the above wireless charging mechanism, such that the vehicle has low manufacturing cost and is convenient for a driver to watch a mobile phone without affecting driving safety.

In an optional embodiment, there is a second preset angle between the dashboard 3 and a floor 1021 of the vehicle; the second preset angle is 10-70 degrees.

The above description are only preferred embodiments of the present application, and are not intended to limit the present application. Any modification, equivalent replacement, and improvement made within the spirit and principles of the present application should be included in the protection scope of the present application.

## Claims

1. A wireless charging mechanism comprising: a wireless charging apparatus (1), wherein the wireless charging apparatus (1) is arranged on a dashboard (3) of a vehicle; the wireless charging apparatus (1) comprises an opening (101), the opening (101) faces a steering wheel (4) of the vehicle; the wireless charging apparatus (1) is configured to place a mobile phone and charging the mobile phone; and a sun blocking cover (2), wherein the sun blocking cover (2) is rotatably connected to the dashboard (3) or the wireless charging apparatus (1), and matches with the opening (101).

2. The wireless charging mechanism according to claim 1, wherein the wireless charging apparatus (1) further comprises a placement structure (102) and a wireless charging module (103); the wireless charging module (103) is connected to a bottom of the placement structure (102), and the placement structure (102) is configured to place the mobile phone; the wireless charging module (103) is connected to a control system of the vehicle and configured to charge the mobile phone.

3. The wireless charging mechanism according to claim 2, wherein the placement structure comprises a bottom board (1021); the bottom board (1021) comprises a first surface and a second surface being opposite to each other; the first surface is adjacent to the opening (101), and the first surface is in contact with the mobile phone; the wireless charging module (103) is arranged on the second surface.

4. The wireless charging mechanism according to claim 3, wherein the placement structure (102) further comprises a stop member (1022); the stop member (1022) is arranged at a first side of the bottom board (1021), the first side is a side being adjacent to a floor of the vehicle; an area enclosed by the stop member (1022) and a side edge of the bottom board (1021) is the opening (101).

5. The wireless charging mechanism according to claim 3, wherein the placement structure (102) further comprises a coaming (1023), the coaming (1023) is a circular structure; a bottom of the coaming (1023) is connected to the first surface; an area enclosed by a top of the coaming (1023) is the opening (101).

6. The wireless charging mechanism according to claim 3, wherein the first surface is provided thereon with a buffer member; material of the buffer member comprises rubber.

7. The wireless charging mechanism according to claim 2, wherein the wireless charging module (103) is further configured to transmit a charging signal to the control system; the mobile phone is connected in communication with the control system of the vehicle, the mobile phone is configured to receive vehicle information transmitted base on the charging signal by the control system, and display the vehicle information on a display screen of the mobile phone.

8. The wireless charging mechanism according to claim 2, wherein the dashboard (3) comprises a recess groove structure and a flat plate structure connected to each other; the flat plate structure is connected to a vehicle frame of the vehicle, the placement structure (102) is located in the recess groove structure, and the sun blocking cover (2) is rotatably connected to the recess groove structure; when the sun blocking cover (2) is closed, the sun blocking cover (2) and the flat plate structure are located in the same plane.

9. The wireless charging mechanism according to claim 2, wherein a cross-sectional area of the placement structure (102) comprises a rectangle and an ellipse.

10. The wireless charging mechanism according to claim 2, wherein when the sun blocking cover (2) is opened, there is a first preset included angle between the sun blocking cover (2) and the bottom of the placement structure (102); a range of the first preset included angle is 10-80 degrees.

11. The wireless charging mechanism according to claim 1, wherein the opening (101) and the dashboard (3) have preset heights.

12. A vehicle comprising a dashboard (3) and the wireless charging mechanism according to any one of claims 1-11.

13. The vehicle according to claim 12, wherein there is a second preset angle between the dashboard (3) and a floor (1021) of the vehicle; the second preset angle is 10-70 degrees.
